**Europäisches Patentamt**

(19) **European Patent Office**

**Office européen des brevets**

(11) Publication number: **0 106 885**
**B1**

(12) # EUROPEAN PATENT SPECIFICATION

(45) Date of publication of patent specification: **10.08.88**

(51) Int. Cl.⁴: **B 65 H 77/00, F 16 H 7/00**

(21) Application number: **83901756.3**

(22) Date of filing: **11.04.83**

(86) International application number:
**PCT/US83/00527**

(87) International publication number:
**WO 83/03814 10.11.83 Gazette 83/26**

(54) **ROPE TENSION DEVICE.**

(30) Priority: **30.04.82 US 373456**

(43) Date of publication of application:
**02.05.84 Bulletin 84/18**

(45) Publication of the grant of the patent:
**10.08.88 Bulletin 88/32**

(84) Designated Contracting States:
**DE FR GB NL SE**

(56) References cited:
US-A- 30 842
US-A- 107 917
US-A- 143 993
US-A- 171 354
US-A- 546 788
US-A- 869 130
US-A- 959 667
US-A-2 051 735
US-A-2 087 253
US-A-2 203 342
US-A-3 511 492
US-A-3 777 672
US-A-3 817 113
US-A-4 022 450
US-A-4 273 066
US-A-4 285 676

(73) Proprietor: **MURDOCK MACHINE AND
ENGINEERING COMPANY OF TEXAS
5100 Airport Freeway West
Irving, TX 75061 (US)**

(72) Inventor: **SULLIVAN, Paul Eugene
1616 Staffordshire
Bedford Texas 76021 (US)**
Inventor: **PEPPEL, George, Walter
3204 Wild Oak Court
Arlington Texas 76016 (US)**

(74) Representative: **Boon, Graham Anthony et al
Elkington and Fife High Holborn House 52/54
High Holborn
London, WC1V 6SH (GB)**

Courier Press, Leamington Spa, England.

## Description

Technical field

The present invention relates generally to nautical fittings and more particularly to a tension damper device that may be used to absorb the sudden changes in tensile forces to which a wire rope or other flexible line securing a vessel to its mooring is subjected as the vessel moves relative to the mooring.

Background art

When a boat or other vessel is moored to a pier or other mooring by means of a wire rope or other flexible but relatively inelastic line, it is conventional to provide the line with some type of device for maintaining the line taut while allowing a predetermined amount of resilient elongation in order to allow relative movement between the vessel and its mooring.

U.S. Patent 4,022,450, entitled "Line Tensioning Device", is representative of one such prior art device which utilizes a pair of tension springs to maintain a resilient Z-shaped bend in the line that stretches into a more elongated shape when a predetermined tensile force is applied to the line.

U.S. Patents 546,788 and 869,130, respectively entitled "Cable Buffer" and "Yielding Boat Cleat", disclose prior art mechanical devices in which one or more coil springs are compressed as excessive tensions or strains are applied to the hawser, cable or rope.

U.S. Patents 143,993 and 107,917, respectively entitled "Windlasses" and "Improvements in Surge-Relievers", disclose other devices in which shocks in the cable caused by the movement of the vessel are absorbed by a plurality of rubber springs.

It will be noted that the above-described prior art tension absorbing devices utilize spring elements which are compressed or elongated in a linear direction and accordingly there is an approximately linear relationship between the stress applied to the rope and the resultant increase in its effective length.

U.S. Patent 4,273,066, entitled "Oil Storage Vessel, Mooring Apparatus And Oil Delivery For The Off-Shore Production of Oil", proposes various apparatus for mooring a vessel at sea to a deep water submerged mooring which includes both a mooring line (which depending upon the particular application may be either a floating rope or a heavy chain) and a flexible length of oil transfer hose. The Patent makes mention of a manually or automatically controlled tension releasing (self-rendering) mooring winch, and a mechanical damping device (a damping roller) at columns 5 and 8. Column 15 of the Patent describes a mechanism called "The Damper" which is said to be designed and adjusted to absorb a portion of the shock cyclical loadings placed on the mooring line. The Damper is described as comprising a concave roller with butt ends over which the mooring line will pass, the roller being held at a specific height above. and astern of the wire rope winch by two arms which pivot about an axis, the arms in turn being held in position by springs or hydraulically controlled rams. This same Patent also discusses the use of a mooring line to effect a resilient connection between a floating storage vessel and a service tanker with the required tension being provided by placing the propeller on the service tanker in its reverse power position to provide a predetermined amount of tension on the line and the oil hose is arranged in such a way that a relative motion between the vessels of up to a 150 feet (about 45 meters) may be accommodated (column 12).

Mechanical tensioners have also been employed to maintain a more or less constant tension in endless drive belts such as are utilized to drive the various accessory subsystems associated with a modern automotive engine. Such belt tensioner devices are intended to compensate for the changes in the belt's length during its service lifetime while ensuring that a proper amount of tension is maintained in the belt to eliminate any slipping between the belt and the various pulleys around which it travels and at the same time without exerting an excessive tension force on the belt.

U.S. Patent No. 4,285,676 and Reissue Patent No. 30,842, entitled respectively "Mechanical Belt Tensioner Construction" and "Tensioning Apparatus", disclose typical prior art endless drive belt tensioners wherein a torsional spring is provided at one end of a lever arm for pivotally moving an idle pulley at the other end of the lever arm in a direction generally perpendicular to the belt's longitudinal orientation as it extends between adjacent fixed pulleys to thus compensate for changes in the belt's length by increasing the effective distance between the fixed pulleys. The torsional spring may comprise a plurality of coil springs (such as is shown in Patent 4,285,676) or, alternatively, may be a hollow cylinder of elastomer material which exerts the required rotational force as the result of the elastomer being subjected to a torsional shear (such as is shown in Reissue 30,842).

U.S. Patent 3,817,113, entitled "Chain Drive with Idler Wheel Tensioning Means Biased by Elongated Pads", is particularly related to a chain drive for textile machines which may have to be abruptly stopped and restarted such that the chain thereby experiences considerable strain. A torsion effect results as a plurality of rubber pads are distorted in cross section as the tension device is rotated.

It will be appreciated that dampers that have been adapted for use with continuous belt chains and other similar drive systems will never be required to handle the particularly large forces and constant pounding that are associated with many nautical applications. Accordingly, the reactive force resulting from the application of an unbalanced torque (rather than a balanced torque couple) will probably not materially affect the reliability of such devices when used for their intended application.

U.S. Patent 2,087,253, entitled "Tilting Mechanism Especially For Chairs", illustrates the use of a cylindrical body of rubber that is highly compressed and confined between concentric tubular members so as to in effect be bonded to their surfaces such that relative rotary movement between the tubular members puts the rubber body under torsional strain. An adjusting mechanism is provided to vary the torsional strain imposed upon the rubber and thus the force required to tilt the seat of a chair supported by such a resilient rubber arrangement. Such a form of construction is believed to be exemplary of a number of different applications in which a cylindrical rubber bushing is utilized to accommodate a limited rotational movement between adjacent structural elements, while at the same time biasing the mechanism to its normal position. It should be noted that such a bushing, although cylindrical in shape, does not employ what is hereinafter referred to as "longitudinal torsional shear" and that furthermore the "radiating" torsional shear within the rubber is concentrated in its hub portion, rather than being distributed uniformly.

US—A1711354 and US—A—959667 each describe a tension damper device for a wire rope or other relatively inelastic flexible line comprising a stationary frame connected to a rotatable arm having a first rotational axis, said arm rotating from a zero load position to a position under load; a first sheave rotatably mounted at one end of said arm about a second rotational axis parallel to said first rotational axis of said arm; a second sheave rotatably mounted at the opposite end of said arm about a third rotational axis parallel to said first rotational axis of said arm; said first sheave and said second sheave guiding said rope from a generally S-shaped configuration to a relatively straight configuration under increasing tension as the arm is caused to rotate about said first rotational axis.

According to the present invention there is provided a tension damper device of the type set out in the immediately preceding paragraph characterized by an elastomeric torsion spring oriented about said first rotational axis of said arm and connecting said arm to said frame, said spring providing a counter-torque approximately proportional to the angular displacement of said arm from said zero load position to a position under load; said elastomeric torsion spring comprising a cylindrical body in which the torsional shearing is distributed in the longitudinal direction of the torsional element to effect a longitudinal torsional shearing action, and said cylindrical body having a first end adapted to rotate with said arm and a second end secured against rotation with respect to said frame, said vessel being for securing a vessel to its mooring.

In accordance with a preferred embodiment of the invention, the elastomeric torsion spring has the configuration of a pair of hollow cylinders, one concentrically nested inside of the other, and has its cylindrical axis coaxial with the arm's rotational axis, with a first end of the outer cylinder being fixedly connected to a first end of the inner cylinder such that when one of the respective second ends is attached to the arm and the other of the respective second ends is attached to the outer frame, the torque generated by the inner elastomeric cylinder and the torque generated by the outer elastomeric cylinder are combined. Since each of the two nested cylinders need accommoate only a portion of the rotation of the arm relative to the outer frame, the corresponding length of each of the cylinders will be shorter for a given maximum shear angle within the elastomer, thereby permitting a more compact design to be constructed for a given set of operational parameters.

Preferably, a pair of such elastomeric torsional members are provided, one on either side of the rotatable arm and concentric with its rotational axis.

In another embodiment of the invention, the elastomeric member may be configured as an elongated cylinder with one end of the cylinder attached to the rotatable member and the other end of the cylinder attached to the fixed member.

As a result of the design geometry, as an increase in tension in the rope rotates the arm and elongates the S-shaped bend, a correspondingly lesser leverage is associated with the torque couple applied to the arm by the tension in the rope. Since the elastomer provides a counter-torque approximately proportional to the angular displacement of the arm, the device will always maintain at least a slight bend in the cable and thus be able to absorb further momentary increases in the tension applied to the cable. Furthermore, by appropriate initial adjustment of the orientation of the rotation arm under zero torsion load conditions relative to the orientation of the rope as in enters and exits the device, it is possible to vary the operational characteristics of the device and in particular the rate at which the effective length of the rope changes with respect to a predetermined increment of tension.

Brief description of the drawings

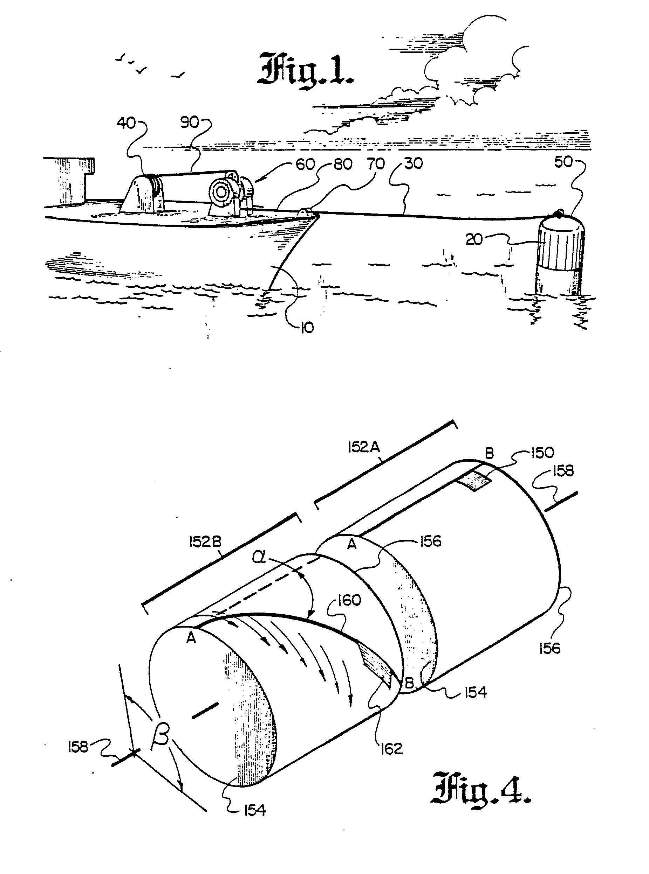

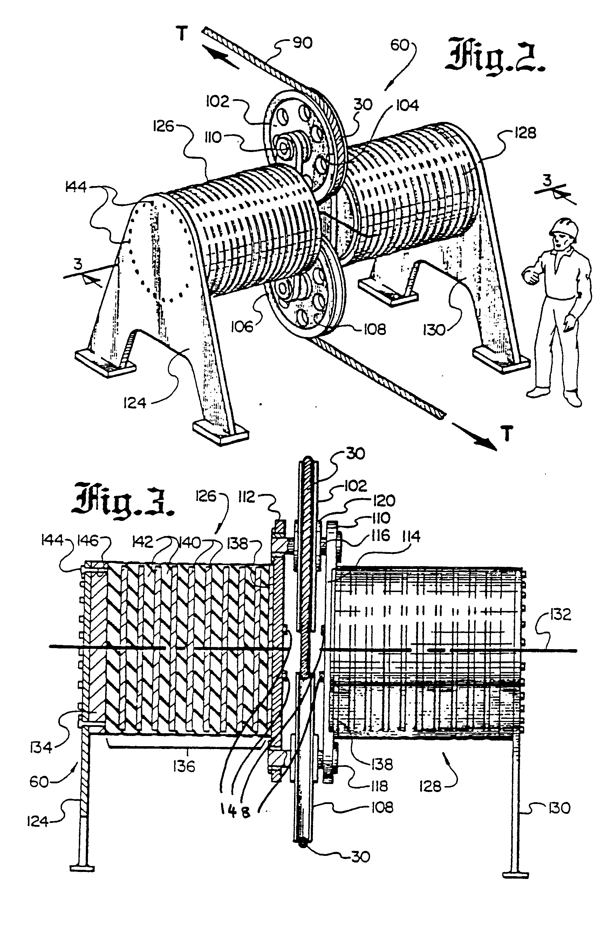

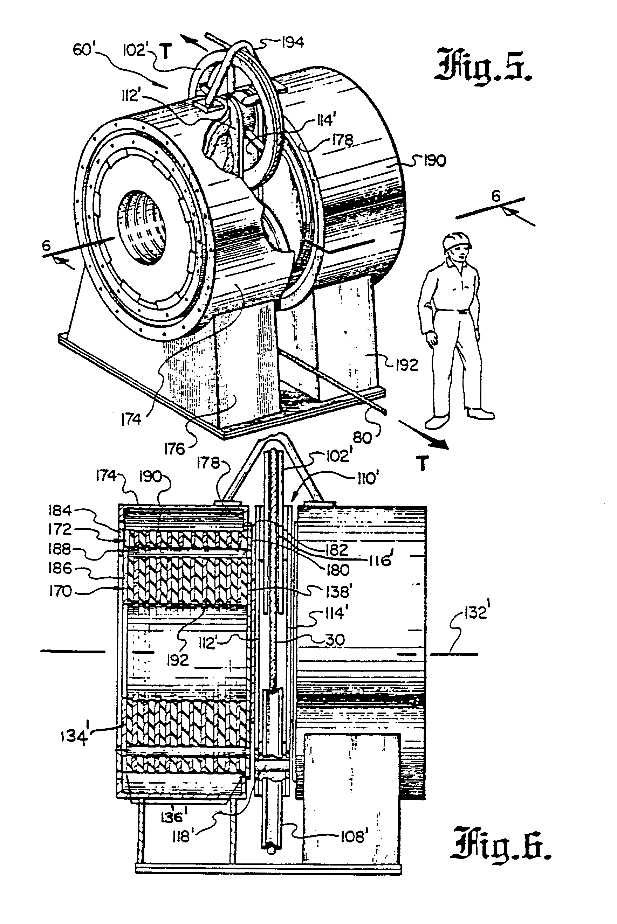

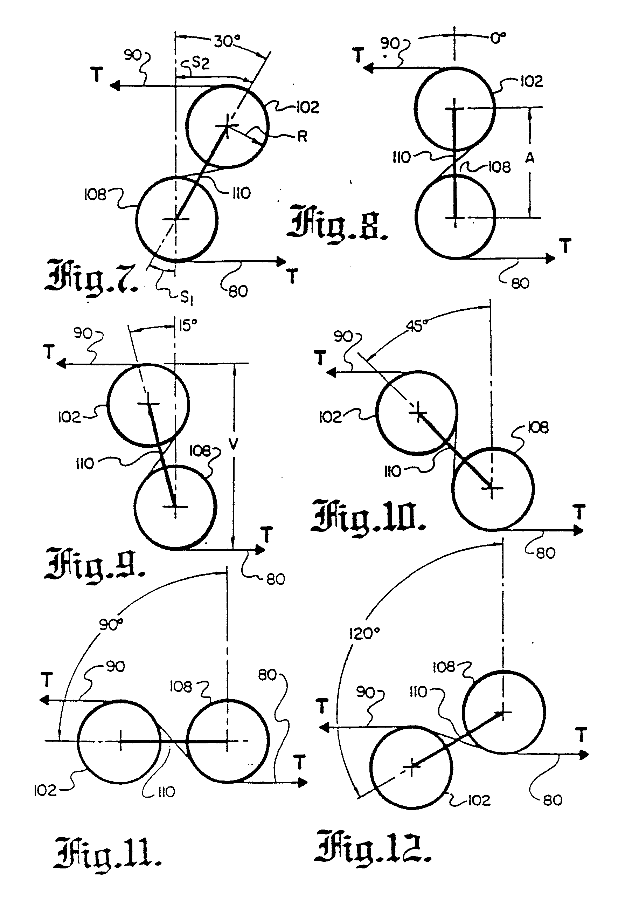

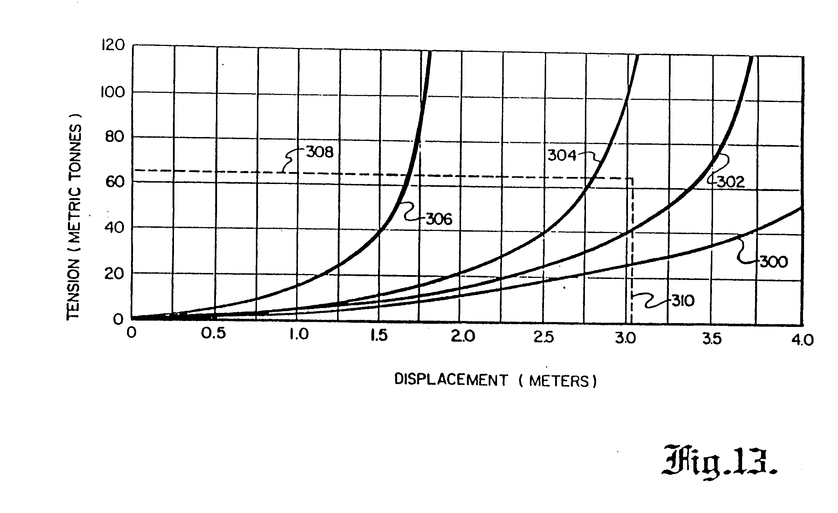

Figure 1 is a diagrammatic representation of a rope tension damper device in accordance with the present invention in use aboard a ship to absorp sudden changes in tension in the rope used to attach the ship to a mooring buoy; Figure 2 is a isometric view of the damper device of Figure 1 together with a portion of the rope associated therewith; Figure 3 is a side elevational view partially in cross section of the damper device of Figure 2; Figures 4a and 4b are a pair of isometric diagrams of a cylinder of elastomeric material showing the geometric relationship between the shear and the torsion before and after the cylinder has been subjected to a torsional shear; Figure 5 is a isometric view of a second embodiment of a rope tension damper device constructed in accordance with the present invention wherein the elastomeric torsion elements are nested thereby resulting in a more compact unit; Figure 6 is a side elevational view partially in cross section of the embodiment of Figure 5; Figures 7 through 12 are geometric diagrams schematically showing a rope tension damper device in accordance with the present invention with the angle between the arm and the external orientation of the rope being respectively minus 30 degrees, 0 degrees, 15 degrees, 45 degrees, 90 degrees, and 120 degrees; and Figure 13 is a set of graphs showing the relationship of the tension applied to the rope as a function of the displacement when the initial zero load orientation of the arm with respect to the rope is respectively 45 degrees, 15 degrees, 0 degrees, and minus 30 degrees.

Reference should now be made to the drawings, and in particular to Fig. 1 thereof, which it will be recalled is a diagrammatic representation of a device in accordance with the present invention used to absorb changes in tension in a ship's mooring rope. It will be seen that the ship (10) is secured to a mooring buoy (20) by means of a mooring rope (30). Typically, the mooring rope (30) will be a twisted cable of steel strands having an overall diameter of approximately 5 centimeters and will be capable of withstanding a considerable tensile force but may also be any other suitable type of rope or a chain. The cable (30) thus will normally be more than adequate to secure a relatively large vessel (for example, a 100 ton oil tanker) relative to its mooring (20). However, in high seas, the action of the waves will cause the vessel (10) to pitch and roll, which in turn will result in relative movement between the vessel (10) and its mooring (20). Accordingly, as the vessel (10) moves towards its mooring, there will be a tendency for slack to develop in the mooring rope (30). Conversely as the vessel (10) moves away from the mooring (20), any slack in the cable (30) will be taken up and unless appropriate means is provided to prevent the buildup of excess tension, the cable (30) will suddenly have to withstand a sudden potentially large force impulse as the momentum of the vessel (10) is transferred to its mooring (20) through the now taut rope (30). To some extent, the effects of such an increase in the tension to which the rope (30) is subjected may be avoided by means of prior art spring-loaded shock absorber devices such as have been described above; furthermore, the winch (40) may be designed and operated so as to offer only a limited resistance to increases in the tension within the cable (30) before it automatically allows the cable to unwind. However, it should be appreciated that such expedients are operable only within a limited range of operational parameters and there still remains a need for an appropriate device that will reliably dampen and absorb the effects of increases in the rope's tension before the tension forces have built up to the point where they may equal or exceed the tensile strength of the rope or of its termination.

As shown in the Figure, the vessel's mooring is a buoy (20) which also is subject to the action of the waves. However, the buoy (20) will normally be anchored to the seabed by means of a system of anchors and/or pipes (not shown in the Figure) maintained in tension by the buoyant action of the buoy (20). Although it is possible to minimize the effects of wave action on the buoy (20) by it such that the greater part of its volume is sufficiently deep to be reasonably free from severe wave action, it nonetheless will be appreciated that the buoy (20) also will experience some motion that will be out of phase with the pitching and rolling of the vessel (10) and thus will further add to the relative motion between the vessel (10) and its mooring (20).

A first end of the cable (30) is wound about a winch (40) on the deck of the vessel (10), while the other end of the cable (30) is attached to the buoy (20) by means of a suitable cable attachment (50); the winch (40) thus functions to secure—albeit in an adjustable fashion—the cable (30) relative to the vessel (10). A novel tension device (60) is installed on the vessel (10) such that is in an intermediate position between the winch (40) and a fairlead (70) which may be provided at the gunnel of the vessel to control the orientation of the exiting portion (80) of the cable (30) relative to the tension device (60). The portion (90) of the cable (30) entering the tension device (60) will normally be at a proper orientation relative both to the winch (40) and to the tension device (60) by virtue of the fact that the cable (30) extends directly from the winch (40) to the tension device (60) and both are commonly mounted on the deck of the ship (10). Furthermore, the entering portion (90) of the cable (30) and the exiting portion (80) are oriented more or less parallel to one another but spaced apart such that as tension is applied to the cable (30) a torque couple will be applied to the tension device (60), the magnitude of which being determined not only by the tension in the rope (30) but also by the vertical displacement of the entering portion (90) relative to the exiting portion (80).

At this point, it should be noted that although particulary adaptable for use for securing an oil tanker to a buoy provided at the upper end of a riser leading from an undersea oil well, thereby locating the vessel relative to the mooring buoy while oil is pumped from the well to the tanker by means of a flexible oil line (not shown in the Figure), the tension device (60) may also advantageously be used when the vessel is to be attached to fixed moorings such as provided by a pier or a fixed platform mounted on pilings penetrating the ocean floor (for example, in shallower regions such as may be found along the continental shelf), as well as when a first vessel is to be tied to a second vessel (for example, a tugboat to a barge, or a floating storage vessel moored in the vicinity of an undersea well to a service tanker while the service tanker is off-loading oil from the storage vessel).

Reference should now be made to Figs. 2 and 3 which are respectively isometric and side-elevational views of the damper (60) shown in Fig. 1.

The rope (30) is guided by an upper sheave (102) from its generally horizontal orientation extending between the winch (40) and the tension device (60) over the front portion (104) of the upper sheave (102), to the rear portion (106) of a lower sheave (108), then finally to the lower horizontal portion of the rope (30) as it extends from the tension device (60) towards the fairlead (70) (Fig. 1).

The upper sheave (102) and the lower sheave (108) are rotatably mounted at the respective upper and lower ends of a rotatable arm assembly (110). As shown in the Figures, the longitudinal orientation of the arm assembly (110) when at rest (zero tension in the cable) is more or less vertical and thus more or less perpendicular to the horizontal orientation of the respective incoming and exiting portions (90, 80) of the cable (30).

In the embodiment illustrated in Figs. 2 and 3, the arm assembly (10) comprises a pair of spaced plates, namely, a left plate (112), and a right plate (114), connected to each other at their respective upper ends by means of an upper sheave pin (116) and at their respective lower ends by means of a lower sheave pin (118). The upper sheave (102) includes a hub bushing (120) to permit the upper sheave (102) to rotate coaxially about the upper pin (116), while the lower sheave (108) includes a similar hub bushing (122) so as to permit it to be similarly rotatably mounted about the lower pin (118). Each of the two sheave pins (116, 118) is fixedly secured to only one of the two side plates (114) comprising the arm assembly (110); its free end slides in and out of a bushing provided as part of the opposite plate (112). By this means, a certain amount of variation in the spacing between the left plate (112) and the right plate (114) may be accommodated.

The left arm plate (112) is connected to a left outer frame member (124) by means of a left elastomeric torsional spring (126). A right elastomeric torsional spring (128) similarly connects the right plate (114) to a right outer frame member (130). Referring specifically to Fig. 3, it may be seen that the left torsion spring (126) and the right torsion spring (128) are substantially identical to one another, each being in the shape of a cylinder and each being concentric about a common axis (132), which intersects the arm assembly (110) at approximately ninety degrees ($1/2\pi$ radians).

Referring now to the left elastomeric torsion spring (126) shown in cross section in Fig. 3, it will be seen that the torsion spring assembly comprises a relatively thick outer end plate (134), an intermediate portion (136) and an inner end plate (138) somewhat thinner than the outer end plate (134). The intermediate spring portion (136) is molded of an appropriate elastomeric material such as neoprene or other rubber-like material resistant to the effects of sunlight, salt water and other related adverse environmental conditions such as may be encountered in a maritime environment. The intermediate portion (136) also compriss a plurality of rigid reinforcing plates (140), each of which is thin, relatively flat and oriented generally perpendicular to the axis (132) about which the arm assembly (110) rotates. The elastomer portion (142) of the elastomeric springs (126, 128) is bonded to the reinforcing disks (140) and to the two end plates (134, 138) such that when the inner end plate (138) is rotated about the axis (132) and the outer end plate (134) is held stationary, a torsional shearing action is imparted to the elastomer material (142) which in turn generates a counter torque about the axis (132) in an amount that is substantially proportional to the magnitude of the rotation of the inner end (138) with respect to the outer end (134).

The function of the reinforcing plates (140) is to impart anisotropic characteristics to the elastomeric spring and in particular, to stiffen the elastomer against unwanted flexing without reducing the torsion spring's ability to accommodate the winding and unwinding of one end relative to the other about the central axis (132) of the cylinder (136) (see also the discussion of Fig. 4 hereinafter). This is accomplished by orienting the reinforcing disks (140) parallel to the direction of the intended shear. It will also be appreciated that the reinforcing disks (140) has a further effect of minimizing the tendency of the elastomeric assembly to be subjected to changes in length or diameter in response to simple external compressive and tensile forces. Although it will be appreciated that when a torque couple is applied to the reinforced elastomeric assembly (136) to produce a shear in a direction perpendicular to the central axis (132), the individual reinforcing plate will have no appreciable effect thereon.

In the embodiment illustrated in Figs. 2 and 3, each of the outer ends (134) is secured in position with respect to its corresponding outer frame member (124, 130) by means of a plurality of fasteners (144). The fasteners (144) engage a corresponding plurality of bores (146) in the outer end plate (134). Since the fasteners (144) and the respective bores (146) are spaced at regular intervals (for example, 15°) about a circumference of a circle, it will be appreciated that it will be possible to adjust the initial angular orientation of the arm assembly (110) and the two sheaves (102, 108) with respect to the orientation of the rope as it exits (80) and enters (90) the tension device (60) by selecting which particular pin (144) is to be inserted into which particular bore (146). The minimum increment of such an adjustment will be determined by the angular spacing between adjacent fasteners (144); however, if a finer adjustment is required, it will be evident to a skilled artisan that such a need may be accommodated by providing an additional adjustment means are provided to reduce the amount of a single increment.

A plurality of bolts (148) are provided to clamp the respective left and right plates (112, 114) forming the arm assembly (110) to the respective inner end plates (138) of the respective left and right elastomeric torsion spring assemblies (126, 128). In the embodiment illustrated, the respective surfaces of inner end plates (138) facing the arm assembly (110) are provided with a suitable groove into which the respective arm plate (112, 114) is partially countersunk, thereby preventing any rotational slippage between the end plate (138) and its respective arm plate (112, 114). Accordingly, the individual bolts (148) which secure the two end plates (138) to their respective arm plates (112, 114) are not exposed to excessive side shear as a result of the torque transmitted from the elastomeric springs (126, 128) to the arm assembly (110) and vice versa. In the embodiment illustrated there is further provided the capability of adjusting the height of the arm assembly (110) relative to the elastomeric springs (126, 128) and the outer frames (124, 130) merely by loosening the arm securing bolts (148) and sliding the arm (110) along the aforementioned grooves in the inner end plate (138) to the desired position, whereupon the bolts (148) may be again tightened. In that regard, it will normally be preferable to center the arm assembly (110) with respect to the central axis (132) of the cylindrical torsion element (136) and to orient the winch (40) and the fairlead (70) (see Fig. 1) relative to the entering and exiting portions (90, 80) of the cable (30) in symmetric fashion such that only a pure torque couple is applied to the elastomeric springs (126, 128) and they are not subjected to excessive translational forces.

The torque generated by an elastomeric torsion element may be expressed by the equation

$$M = aGI_p/L$$

where "a" equals the angular displacement of one end plate relative to the other in radians; "G" equals the shear modulus of the elastomeric material in kilograms per square meter (Kg/m²); "$I_p$" is the polar moment of inertia in quadratic meters (m⁴) and "L" is the length of the elastomer in its axial direction expressed in meters (m). (For a solid cylinder, the polar moment of inertia $I_p$ will be equal to $1/4\pi R^4$, where R is the radius of the cylinder in meters).

Since one degree equals 0.01745 radian and a typical shear modulus is 225 psi (about $1.6 \times 10^5$ Kg/m²), it therefore may be calculated that a pair of elastomeric cylinders such as have been shown in Figs. 2 and 3 having a radius of 24 inches (approximately 0.61 meters) and a length of 46 inches (approximately 1.17 meters) will produce a combined counter-torque of approximately 520 meter-kilograms per degree of rotation.

Referring now to Fig. 4, which it will be recalled is intended to show the geometric relationships between the shear and the torsion, it will be seen that a square element (150) may be defined on the outer circumference of an elastomeric cylinder prior to the application of any torsional shear (152A) such that the square will lie against a straight line A—B connecting points A and B respectively on the other and inner ends (154, 156) of the cylinder (152) and parallel to the axis (158) of the cylinder. However, when one end (154) is rotated with respect to the other end (156) by an angle (cylinder 152B) such that the line connecting point A with point B is no longer a straight line parallel to the axis (158) but rather is a helical spiral (160), then the square element (150) will be distorted (sheared by the angle α) into a rhombus (162) whose respective vertices will be (1/2π−α) and (1/2π+α). For a typical elastomer material, the maximum shear angle through which it may be subjected without any loss of its elastic properties may be conservatively limited to be 45 degrees (1/4π radians). Using the above-stated typical values (L equals 1.17 meters, R equals 0.61 meters), it may be calculated that the corresponding maximum rotation β of the one end plate (134) with respect to the other (138) will be approximately 1.9 radians (109 degrees).

Reference should now be made to Figs. 5 and 6 of the drawings, which it will be recalled illustrate another embodiment of the invention wherein a more compact unit than that shown in Fig. 1 is provided as a result of the elastomeric torsion elements being nested.

From the above discussion of Fig. 4, it will be recalled that conservative design practice makes it desirable that no portion of the elastomer be subject to a shear strain greater than 45 degrees. Accordingly, in the embodiment of Figs. 2 and 3, if the arm assembly (110) is to be provided with the capability of deviating 109 degrees in either direction from its rest position, it is necessary for the diameter of the cylinder to be approximately equal to its length. Furthermore, from the above-stated formula for the torque generated by an elastomeric element as it is twisted about an axis, it will be noted that the torque is a function of the polar moment of inertia about that axis. Accordingly, the interior of the cylinder makes a relatively small contribution to the total torqe. Taking both the above factors into account, it may be readily appreciated that by nesting two hollow elastomeric cylinders, one within the other, with a first end of the outer cylinder being fixedly connected to a first end of the inner cylinder, the torque generated by the inner elastomeric cylinder and the torque generated by the outer elastomeric cylinder will be combined such a way that only a portion of the rotation of the arm assembly (110) relative to the outer frame need be accommodated by each of the two nested cylinders. The embodiment shown in Figs. 5 and 6 take advantage of these considerations. In these Figures, the various reference numbers previously utilized with respect to the embodiment of Figs. 1 and 2 have been retained but the prime symbol (') has been appended to distinguish otherwise similar elements of the two embodiments. (A similar convention will be applied to the embodiment of Figs. 7 and 8 using the double prime symbol ('')).

Referring now specifically to Figs. 5 and 6, with Fig. 5 being an isometric view (partially broken away to better show the arm assembly (110)) and Fig. 6 being a side elevational view partially in cross section as indicated by the line 6—6 in Fig. 5, it will be seen that this embodiment is much more compact in the direction of the longitudinal axis (132'), although for a given set of operational parameters, its overall height is determined by the vertical displacement between entering cable portion (90) and exiting cable portion (80) and thus will be substantially identical to the corresponding vertical dimensions of the previously described embodiment. The function of the solid cylindrical elastomeric torsional element (126) (Figs. 2 and 3) is now performed by a nested pair of hollow torsional elements, namely, an inner hollow cylindrical element (170) and an outer hollow cylindrical element (172). An outer tubular shell (174) rigidly mounted to a hollow base (176) functionally corresponds to the left outer frame (124) of the previous embodiment.

From the cross sectional view of Fig. 6, it can be seen that an inwardly protruding annular rim (178) is fastened to an inboard annular end plate (180) of the outer elastomeric element (172) by means of an appropriate mechanical fastener (182). Although symbolized in the drawings by a bolt (182), it should be appreciated that other fastening means such as welding and/or riveting may also be employed to provide the required relatively rigid connection between the outer shell (174) and the inboard end plate (180). The outboard end of outer elastomeric element (172) is terminated by an outer annular end plate (184) which is rigidly fastened by a plurality of bolts (or other appropriate fastening means) (186) to the outboard annular end plate (188) of the inner elastomeric element (170). The inboard end of the inner elastomeric element (170) is terminated by an inboard end plate (138') to which is anchored the left arm (112') of the rotatable arm assembly (110'). From the Figure it may also be seen that the radial thickness of the inner hollow cylinder (170) is somewhat greater than that of the outer hollow cylinder (172). As noted previously, the torque produced by such an elastomeric element for a given torsional twisting about its longitudinal axis is a linear function of the polar moment of inertia and in fact increases as the fourth power of the radius. Since the outer torsional element (172) should share the torque and rotational movement of the arm assembly (110) in an equal fashion with the inner torsional element (170), it accordingly should have about the same stiffness as, and thus should be somewhat thinner than, the inner element. Both the inner and outer elastomeric elements (170, 172) employ the same reinforced integrally molded structure as that of the elastomeric element (136) shown in Fig. 3 and in particular are preferably molded of a rubber-like material capable of withstanding the adverse effects of the maritime environment (such as neoprene), the rubber being reinforced by a plurality of plates of a suitable reinforcing material such as stainless steel, aluminum, or Kevlar embedded in the elastomer during the molding process and oriented perpendicular to the device's main axis of rotation (132'). However, the individual reinforcing elements are not disk-shaped but rather are in the respective shapes of outer annuluses (190) and inner annuluses (192). (In that regard, it may be observed that the embodiment of Fig. 2 and Fig. 3 may optionally be modified by the substitution of a annulus-shaped reinforcing element for the disk-shaped element (140) shown in the Figure, since the reinforcing function of the disk (140) is required more towards the periphery of the cylinder than in its middle).

It will be appreciated that the right-hand elastomeric spring of the second embodiment (60') inside the right-hand tubular shell (190) and supported by the right-hand base (192) is the mirror image of the corresponding structure discussed previously with respect to the left-hand portion of the device. In order to provide additional rigidity, an upper connection link (194) may be advantageously provided to connect the corresponding upper portions of the left-hand tubular shell (174) and the right-hand tubular shell (190). Such a linking member (194) will also provide a means whereby the entire device (60') may be conveniently hoisted and will serve as a guide to maintain the cable entering portion (90) in its proper relationship with respect to upper sheave (102') when the arm assembly (110') is in its at-rest position and there will accordingly be the possibility of slack in the cable (30).

The operational characteristics of a rope tension device constructed in accordance with the present invention will now be discussed with particular reference to the geometric diagrams of Figures 7 through 12 and the graph of Figure 13.

Figures 7 through 12 it will be recalled are intended to schematically show a typical rope tensioner device in accordance with the present invention (60, 60', or 60'') with the angle between the arm (110, 110', 110'') and the external orientation of the rope (80, 90) being rotated to respectively minus 30 degrees (Fig. 7), 0 degrees (Fig. 8), 15 degreees (Fig. 9), 45 degrees (Fig. 10), 90 degrees (Fig. 11) and 120 degrees (Fig. 12).

Referring now specifically to Fig. 7, it will be seen that the Figure represents symbolically the upper sheave (102), the lower sheave (108), the arm (110) and a portion of the rope (30) (including an upper portion (90) where it enters the device from the winch and a lower exiting portion (80) where it exits the device on its way to the fairlead (70)). Both the upper sheave (102) and the lower sheave (108) have the same respective radius "R" and are mounted apart from one another along the rotatable arm (110) at a fixed distance "A". Since entering portion (90) and exiting portion (80) of the cable (30) will be oriented more or less horizontally during the intended use of the device (see Fig. 1), it may be seen that the tension will apply a torque couple to the tension device whose magnitude is equal to the tension "T" times the vertical displacement "V" between the incoming and exiting portions of the cable. Figures 7 through 12 correspond to the rope tension device of the present invention in use with the arm (110) at various angles of inclination with respect to the vertical, however, in the general case, the tension force T is not necessarily applied to the device in the horizontal direction and the angle of interest will then be measured with respect to a line perpendicular to the orientation of the incoming rope portion (90) and the exiting rope portion (80) (or in the event that these portions are not parallel, then a line perpendicular to the bisector of the angle therebetween).

Referring now specifically to Fig. 7, which is intended to show the geometrical characterics of the device when the arm is inclined backwards in an amount 30 degrees from the vertical, it will be seen that the vertical distance V is somewhat less than that shown in Fig. 8 when the arm (110) is oriented vertically. A simple geometric calculation will show that the vertical distance V in Fig. 8 is equal to

$$2R+A$$

while in Fig. 7 it is equal to

$$2R+A \cos (30°).$$

Furthermore, the effective length of the cable (30) will increase by an amount

$$S=S_1+S_2=2R\theta+A \sin (\theta)$$

between the minu θ radian position shown in Fig. 7 and the 0 position shown in Fig. 8 (or between 0 and plus θ radian).

Referring now to Fig. 9, which shows the arm (110) now oriented at an angle of plus 15 degrees with respect to the vertical, it will be seen that the vertical displacement V is now equal to

$$2R+A \cos (15°)$$

while the effective length of the cable (30) will have been further increased by an amount

$$(1/6)\pi R.$$

The corresponding calculations for Figures 10 and 11, which show the arm (110) further rotated as a result of successive increases in the tension T will show that the corresponding vertical distance V will be respectively

$$A \cos (45°)+2R \quad \text{and} \quad 2R$$

while the corresponding elongation S will be respectively

$$A \sin (45°)+1/2\pi R \quad \text{and} \quad A+\pi R.$$

Referring now to Figure 12, it will be seen that the tension of the cable (30) has been increased to the point where the angle is increased to 120 degrees, a value which will normally be in excess of the normal operating range of the elastomeric torsion element which it will be recalled (at least with respect to the numerical examples given with respect to the embodiment of Figs. 2 and 3) is designed with a normal maximum rotational deflection of 109 degrees. In any event, the vertical displacement V will be reduced to an amount equal to

$$2R-A \sin (30°)$$

and the elongation S will be

$$(4/3)\pi R.$$

Reference should now be made to Fig. 13, which is a graph showing the operational characteristics of a rope tension damper device utilizing an elastomeric torsional element subjected to longitudinal torsional shear with the four curves corresponding respectively to the operational characteristics of the device (60) when the arm (110) has been adjusted to an at-rest condition (that is to say, zero tension T in the cable (30)) with an initial inclination of respectively minus 30 degrees (lower curve (300)), 0 degrees (curve (302)), plus 15 degrees (curve (304)) and plus 45 degrees (curve (306)). These correspond respectively to the geometric configuration indicated diagrammatically in Figs. 7, 8, 9 and 10. It will be seen accordingly the first curve (300) is almost linear and provides a displaement S of approximately 4 meters when a tension of approximately 50 metric tonnes is applied to the cable (30) (or conversely a tension T of approximately 50 tonnes will result in a displacement S of approximately 4 meters). The 0 degree curve (302), by way of contrast, starts to climb steeply when the displacement S is in excess of 3 meters and/or the tension T is in excess of 40 tonnes. The 15 degree curve (304) starts to climb steeply at an even lesser displacement S and/or tension T. The 45 degree curve (306) is even more extreme. The horizontal dotted line (308) corresponding to approximately 65 metric tonnes and the vertical dotted line (310) corresponding to slightly more than 3.0 meters indicate a typical set of design parameters. From the various graphs it may be seen that an initial orientation of arm (110) at an angle intermediate 0 degrees and plus 15 degrees will result in a smooth transition offering a noticeable increase in resistance as the design parameters are reached but will permit some additional displacement if the operational parameters are limited without resulting in an excessively high rate of increase in the tension T.

**Claims**

1. A tension damper device for a wire rope or other relatively inelastic flexible line comprising a stationary frame (124; 174, 176) connected to a rotatable arm (110, 110') having a first rotational axis (132, 132'), said arm rotating from a zero load position to a position under load; a first sheave (102, 102') rotatably mounted at one end of said arm about a second rotational axis (116, 116') parallel to said first rotational axis (132, 132') of said arm; a second sheave (108, 108') rotatably mounted at the opposite end of said arm about a third rotational axis (118, 118') parallel to said first rotational axis of said arm; said first sheave and said second sheave guiding said rope from a generally S-shaped configuration to a relatively straight configuration under increasing tension as the arm is caused to rotate about said first rotational axis, characterized by an elastomeric torsion spring (126; 170, 172) oriented about said first rotational axis of said arm and connecting said arm to said frame, said spring providing a counter-torque approximately proportional to the angular displacement of said arm from said zero load position to a position under load; said elastomeric torsion spring (126, 170, 172) comprising a cylindrical body (136, 136') in which the torsional shearing is distributed in the longitudinal direction of the torsional element to effect a longitudinal torsional shearing action, and said cylindrical body having a first end (138, 138') adapted to rotate with said arm and a second end (134, 134') secured against rotation with respect to said frame (124, 174, 176), said flexible line being for securing a vessel to its mooring.

2. A device according to claim 1, which comprises a second frame (130, 190, 192) and a second elastomeric torsion spring (128), said second elastomeric torsion spring being substantially identical to the first said elastomeric torsion spring in operational characteristics, one end (138, 138') of said second elastomeric torsion spring being adapted to rotate with said arm (110, 110') and the other end of said second elastomeric spring being secured against rotation with respect to said second frame, said second frame being spaced apart from the first frame and separated therefrom by said arm (110, 110').

3. A device according to claim 1, wherein said elastomeric torsion spring (126) comprises at least a pair of cylindrical elastomeric torsional elements (170, 172), at least one (172) of said elements being hollow and adapted to accommodate a second (170) of said elements in concentric nesting fashion, a first end of said hollow cylindrical element being rigidly secured to said frame (174, 176), a second end of said hollow cylindrical element being rigidly secured to a first end of said second cylindrical element and a second end of said second cylindrical element being connected to said arm (110').

4. A device according to claim 3, wherein said connection between said second end of said cylindrical element and said arm (110') is a rigid connection (138').

5. A device according to claim 3, wherein a second such nested arrangement is provided for securing said arm (110') to a second frame (190, 192) spaced apart from said first frame (174, 176) and separated therefrom by said arm (110').

6. A device according to claim 1 or 2, comprising arm adjustment means (144, 146) for adjusting the rotational position of said arm (110) with respect to said frame from a zero load position to a position under load so that the rate at which the effective length of rope changes with respect to a predetermined increment of tension of said rope varies.

7. A device according to any preceding claims, wherein said elastomeric torsion springs (126, 128, 170, 172) are reinforced by means of a plurality of rigid annular elements (140, 190, 192).

**Patentansprüche**

1. Zugdämpfungsvorrichtung für eine Stahltrosse oder andere relativ unelastische flexible Seile, die ein stationäres Gestell (124; 174, 176), das mit einem drehbaren Arm (110, 110') verbunden ist, der eine erste Drehachse (132, 132') hat, wobei sich der Arm von einer Position mit einer Belastung von Null zu einer Position mit Belastung dreht, eine erste Rolle (102, 102'), die drehbeweglich an einem Ende des Arms um eine zweite Drehachse (116, 116') parallel zur ersten Drehachse (132, 132') des Arms gelagert ist, und eine zweite Rolle (108, 108') aufweist, die am gegenüberliegenden Ende des Arms um eine dritte Drehachse (118, 118') parallel zur ersten Drehachse des Arms gelagert ist, wobei die erste Rolle und die zweite Rolle das Seil von einer im allgemeinen S-förmigen Gestalt zu einer relativ gerade gestreckten Gestalt unter zunehmender Zugspannung führt, wenn sich der Arm um die erste Drehachse dreht, gekennzeichnet durch eine elastomere Torsionsfeder (126; 170, 172), die um die erste Drehachse des Arms angeordnet ist und den Arm mit dem Gestell verbindet, wobei die Feder ein Gegendrehmoment etwa proportional zu der Winkelverschiebung des Armes von seiner Position mit einer Belastung von Null zu einer Position mit Belastung liefert, wobei die elastomere Torsionsfeder (126; 170, 172) einen zylindrischen Körper (136, 16') aufweist, in dem die Torsionsschubspannung in Längsrichtung des Torsionselements zum Bewirken einer in Längsrichtung wirkenden Torsionsschubbelastung verteilt wird, und wobei der zylindrische Körper ein erstes Ende (138, 138'), das derart beschaffen und ausgeleft ist, daß es sich mit dem Arm dreht, und ein zweites Ende (134, 134') hat, das drehfest bezüglich des Gestells (124, 174, 176) festgelegt ist, und wobei das flexible Seil zum Befestigen eines Wasserfahrzeuges an seiner Verankerung bestimmt ist.

2. Vorrichtung nach Anspruch 1, die ein zweites Gestell (130, 190, 192) und eine zweite elastomere Torsionsfeder (128) aufweist, wobei die zweite elastomere Torsionsfeder im wesentlichen übereinstimmend mit der ersten elastomeren Torsionsfeder hinsichtlich den Betriebscharakteristika ausgelegt ist, ein Ende (138, 138') der zweiten elastomeren Torsionsfeder derart beschaffen und ausgelegt ist, daß sie sich mit dem Arm (110, 110') dreht und das andere Ende der zweiten elastomeren Feder drehfest bezüglich des zweiten Gestells festgelegt ist, und wobei das zweite Gestell in einem Abstand von dem ersten Gestell angeordnet und von diesem durch den Arm (110, 110') getrennt ist.

3. Vorrichtung nach Anspruch 1, bei der die elastomere Torsionsfeder (126) wenigstens ein Paar von zylindrischen elastomeren Torsionselementen (170, 172) aufweist, wobei wenigstens eines (172) der Elemente hohl und derart beschaffen und ausgelegt ist, daß es ein zweites (170) der Elemente in konzentrischer ineinandergeschachtelter Anordnung aufnimmt, wobei ein erstes Ende des hohlen zylindrischen Elements starr und fest mit dem Gestell (174, 176) verbunden ist, ein zweites Ende des hohlen zylindrischen Elements starr und fest mit einem ersten Ende des zweiten zylindrischen Elements verbunden ist, und eine zweites Ende des zweiten zylindrischen Elements mit dem Arm (110) verbunden ist.

4. Vorrichtung nach Anspruch 3, bei der die Verbindung zwischen dem zweiten Ende des zylindrischen Elements und dem Arm (110) eine starre Verbindung (138') ist.

5. Vorrichtung nach Anspruch 3, bei der eine zweite derartig ineinandergeschachtelte Anordnung vorgesehen ist, um den Arm (110') fest mit einem zweiten Gestell (190, 192) zu verbinden, das in einem Abstand von dem ersten Gestell (174, 176) angeordnet und von diesem durch den Arm (110') getrennt ist.

6. Vorrichtung nach Anspruch 1 oder 2, die eine Armeinstelleinrichtung (144, 146) zur Einstellung der Drehposition des Arms (110) bezüglich des Gestells von einer Position mit einer Belastung von Null zu einer Position mit Belastung aufweist, so daß die Rate, mit der sich die Wirklänge des Seils bezüglich eines vorbestimmten Zugspannungsinkrements des Seils ändert, variabel ist.

7. Vorrichtung nach einem der vorangehenden Ansprüche, bei der die elastomeren Torsionsfedern (126, 128, 170, 172) mit Hilfe einer Mehrzahl von starren ringförmigen Elementen (140, 190, 192) verstärkt sind.

**Revendications**

1. Dispositif amortisseur de tension pour un câble, une corde ou autre ligne flexible et relativement non élastique, comprenant un bâti fixe (124; 174, 176) relié à un bras rotatif (110, 110') possédant un premier axe de rotation (132, 132'), ledit bras tournant depuis une position de charge nulle vers une position à pleine charge; une première poulie (102, 102') montée de façon rotative à une extrémité dudit bras autour d'un second axe de rotation (116, 116') parallèle audit premier axe de rotation (132, 132') dudit bras; une seconde poulie (108, 108') montée de façon rotative à l'extrémité opposée dudit bras autour d'un troisième axe de rotation (118, 118') parallèle audit premier axe de rotation dudit bras; ladite première poulie et ladite second poulie guidant ladite corde entre une configuration en forme générale de S et une configuration relativement rectiligne sous une tension croissante lorsque le bras est amené à tourner autour dudit premier axe de rotation, caractérisé par un ressort de torsion en élastomère (126; 170, 172) orienté autour dudit premier axe de rotation dudit bras et reliant ledit bras audit bâti, ledit ressort fournissant un contre-couple approximativement proportionnel au déplacement angulaire dudit bras entre ladite position de charge nulle et ladite position à pleine charge; ledit ressort de torsion en élastomère (126, 170, 172) comprenant un corps cylindrique (136, 136') dans·lequel le cisaillement en torsion est réparti dans la direction longitudinale de l'élément de torsion pour réaliser une action de cisaillement longitudinale en torsion, et ledit corps cylindrique ayant une première extrémité (138, 138') adaptée à tourner avec ledit bras et une seconde extrémité (134, 134') fixée de manière à ne pouvoir tourner par rapport audit bâti (124; 174, 176), ladite ligne flexible étant prévue pour maintenir un bateau à son amarrage.

2. Dispositif selon la revendication 1, qui comprend un second bâti (130, 190, 192) et un second ressort de torsion en élastomère (128), ledit second ressort de torsion en élastomère étant sensiblement identique audit premier ressort de torsion en élastomère par ses caractéristiques de fonctionnement, une extrémité (138, 138') dudit second ressort en élastomère étant adaptée à tourner avec ledit bras (110, 110') et l'autre extrémité dudit ressort en élastomère étant fixée de manière à ne pouvoir tourner par rapport audit second bâti, ledit second bâti étant espacé du premier bâti et séparé de celui-ci par ledit bras (110, 110').

3. Dispositif selon la revendication 1, dans lequel ledit ressort de torsion en élastomère (126) comprend au moins une paire d'éléments de torsion cylindriques en élastomère (170, 172), l'un au moins (172) desdits éléments étant creux et adapté à recevoir un second (170) desdits éléments par emboîtement concentrique, une première extrémité dudit élément cylindrique creux étant fixée rigidement audit bâti (174, 176), une seconde extrémité dudit élément cylindrique creux étant fixée de façon rigide à une première extrémité dudit second élément cylindrique et une second extrémité dudit second élément cylindrique étant reliée audit bras (110').

4. Dispositif selon la revendication 3, dans lequel ladite connexion entre ladite second extrémité dudit élément cylindrique et ledit bras (110') est une connexion rigide (138').

5. Dispositif selon la revendication 3, dans lequel un second agencement par emboîtement de ce type est prévu pour fixer ledit bras (110') à un second bâti (190, 192) espacé dudit premier bâti (174, 176) et séparé de celui-ci par ledit bras (110').

6. Dispositif selon la revendication 1 ou 2, comprenant un moyen d'adjustement de bras (144, 146) pour ajuster la position en rotation dudit bras (110) par rapport audit bâti entre une position de charge nulle et une position à pleine charge de manière que varie le taux selon lequel la longueur effective de corde change par rapport à un incrément prédéterminé de tension de ladite corde.

7. Dispositif selon l'une quelconque des revendications précédentes, dans lequel lesdits ressorts de torsion en élastomère (126, 128, 170, 172) sont renforcés au moyen de plusieurs éléments annulaires rigides (140, 190, 192).

# Fig.1.

40 90 60 80 70 30 50 20 10

# Fig.4.

152A 150 158 152B α 156 160 A 156 A B 154 158 β 154 162

Fig.2.

Fig.3.

**Fig.5.**

**Fig.6.**

Fig.7.

Fig.8.

Fig.9.

Fig.10.

Fig.11.

Fig.12.

Fig.13.